# EUROPÄISCHE PATENTANMELDUNG

(11) **EP 3 932 518 A1**
(43) Veröffentlichungstag der Anmeldung: **05.01.2022**
(21) Anmeldenummer: 21177775.0
(22) Anmeldetag: 04.06.2021
(51) Int. Cl.: B01D 39/08, D02G 3/02, D01G 11/00, D01F 13/00, B29B 17/00, D03D 15/20, A47L 9/14

(54) **STAUBSAUGERBEUTEL UND VERFAHREN ZU DESSEN HERSTELLUNG**

(30) Priorität: 01.07.2020 DE 102020117293
(71) Anmelder: Wolf PVG GmbH & Co. KG, 32427 Minden (DE)
(72) Erfinder: CZADO, Wolfgang, 32457 Porta Westfalica (DE)
(74) Vertreter: Dantz, Jan Henning

(57) **Zusammenfassung**

Ein Staubsaugerbeutel (1) mit einem Staubaufnahmeraum (11), umfassend zumindest eine Filterlage aus einem luftdurchlässigen Material welches ein Recycling-Garn aufweist oder daraus besteht.

## Beschreibung

Die vorliegende Erfindung betrifft einen Staubsaugerbeutel und ein Verfahren zu dessen Herstellung.

Vliesfilterbeutel haben in den vergangenen Jahren zunehmen die Papierfilterbeutel im Anwendungsbereich der Staubsauger verdrängt. Grund hierfür sind die wesentlich besseren Staubfiltereigenschaften des Materials.

Oftmals wird dieses Vliesmaterial aus Kunststoff oder Cellulosefasern gefertigt, welche zunächst aus Granulat oder nachwachsenden Rohstoffen aufwendig gewonnen werden.

EP 3 219 374 B1 offenbart einen Staubsaugerfilterbeutel mit einer Wandung aus einem luftdurchlässigen Material mit mindestens eine Lage eines Vliesstoffes und/oder eine Lage aus einem Faservlies umfassend Fasern, die aus einem recyclierten Kunststoff gebildet sind. Die Fasern können aus einer Vielzahl von Kunststoffmaterialien hergestellt sein, wobei die Filtereigenschaften durch unterschiedliche Fasern verändert werden. Im Hinblick auf die Reproduzierbarkeit der Filtereigenschaften ist die Auswahl geeigneter Fasern notwendig.

Es ist daher Aufgabe der vorliegenden Erfindung, ein Staubsaugerbeutel aus einem Material zu schaffen, das gut verfügbar ist, insbesondere im Rahmen einer Wiederverwendung von gebrauchten Materialien, und eine zufriedenstellende Möglichkeit zur Filtration von partikulären Verunreinigungen im Bereich der Staubsaugerbeutel ermöglicht.

Diese Aufgabe wird durch das Bereitstellen eines Staubsaugerbeutels mit den Merkmalen des Anspruches 1 gelöst.

Dabei umfasst ein Staubsaugerbeutel mit einem Staubaufnahmeraum zumindest eine Filterlage aus einem luftdurchlässigen Material. Die Filterlage kann beispielsweise Teil einer den Staubaufnahmeraum begrenzende Wandung sein oder aber auch eine im Staubaufnahmeraum angeordnete Zwischenlage. Zudem kann die Filterlage ein Textillage/Flächengebilde aus Recycling-Garn sein oder eine Lage aus Fasermaterial, welches durch Recyclinggarn zusätzlich verfestigt wird.

Das Recyclinggarn kann durch Weben, Filzen, Flechten, Knüpfen und/oder durch maschenbildende Verfahren wie Stricken, Wirken, Häkeln und/oder Nadelbinden gebildet werden

Das optionale Fasermaterial welches zusätzlich zum Recyclinggarn Teil der Filterlage sein kann, kann verfestigt oder unverfestigt vorliegen und kann vorteilhafterweise ebenfalls Recyclatfasern umfassen oder vollständig daraus bestehen.

Zur Verminderung des Bedarfs an kunststoffbasierten und/oder nachwachsenden Rohstoffen sollen bei der Fertigung von Staubsaugerbeuteln polymere Fasern genutzt werden, welche über ein vergleichsweise hohes Molekulargewicht verfügen, wie es typisch ist bei der Fertigung von Textilien oder Teppichen. Die Verwendung von Fasern mit einem hohen Molekulargewicht sind daher ein Anzeichen für recyclierte Fasern aus staubsaugerfernen Anwendungsbereichen.

Die durchschnittliche Kräuselfrequenz der Fasern eines optionalen Fasermaterials der Filterlage beträgt in einer vorteilhaften Ausgestaltung der Erfindung dabei 0,2 bis 5 Kräusel/cm. Dieser Wert entspricht typischerweise nicht den zumeist eher länger gearbeiteten Vliesfasern im Staubsaugerbereich.

Weiterhin optional kann der Kräuselindex der Fasern des optionalen Fasermaterials der Filterlage, insbesondere bei Fasern der vorgenannten Kräuselfrequenz, zumindest 10%, vorzugsweise 20-55%, betragen.

Die Bestimmung der Kräuselfrequenz kann durch optische Bestimmung erfolgen, wie dies in der DE 1 635 578 A1 offenbart ist.

Der Kräuselindex, auch "curl index" genannt, kann analog zum Verfahren aus der Publikation bestimmt werden:
"Page, Seth Jordan, Barbe: Curl, crimps, kinks and microcompression in pulp fibers - Their origins, measurement and significance, Hymax Ltee, 2995 boul. Le Corbusier, Laval, Quebec, Canada H7L 3M3".

Es hat sich überraschend gezeigt, dass sowohl die Kräuselfrequenz als auch der Kräuselindex der verwendeten recyclierten Fasern des Fasermaterials, welche z.B. bei Teppichen einen positiven optischen Effekt, ein angenehmes Laufgefühl und ein Verdecken von partikulären Schmutz ermöglichen, auch einen positiven Effekt auf die Staubspeicherfähigkeit des Filterbeutels bei den im Staubsauger vorherrschenden Bedingungen haben. Idealerweise können beide Angaben, also die Kräuselfrequenz und der Kräuselindex, miteinander kombiniert werden.

Die Filterlage, wahlweise das Recyclatgarn und/oder die optionale Faserlage, umfasst vorzugsweise zumindest 10% Fasern aus einem Material mit einem Molgewicht von mehr als 35000 g/mol. Die Angabe der Fasern bezieht sich auf die Gesamtzahl aller Fasern in der Filterlage.

Die Filterlage kann vorzugsweise zu einem Großteil, also zumindest zu 50% aller Fasern, aus sogenannten virgin-Fasern gebildet sein und Beimengungen an recycelten Fasern bzw. recycelten Fasermaterial enthalten.

Das recycelte optionale Fasermaterial kann neben den Fasern auch partikuläre Verunreinigungen aufweisen. Hier ist insbesondere Staub aus der vorhergehenden Verwendung der Fasern zu erwähnen. Dieser Staub kann Baustaub, im Fall von Dämmmaterial, aber auch Hausstaub, Sand, Ruß usw. umfassen. Auch Bindemittel, hier u.a. auch Klebstoffreste oder Bindemittel-Polymerbestandteile können im recycelten Fasermaterial enthalten sein. Insbesondere kann es sich um gehärtete Bindemittelreste handeln, welche wieder aktiviert werden können, so dass das Bindemittel positiv bei einer Verfestigung des Fasermaterial bei der Textilbildung einwirkt. Die Aktivierung kann eine thermische Aktivierung sein oder aber eine chemische Aktivierung z.B. durch einen Lösemittelsprühnebel.

Überraschenderweise hat sich gezeigt, dass polymere Fasern mit einem hohen Molekulargewicht von mehr als 35.000 g/mol eine hinreichende Staubabscheidung für die Anwendung in einem Staubsauger ermöglichen.

Besonders bevorzugt sind in diesem Zusammenhang polymere Fasern mit einem Molekulargewicht zwischen 45.000 und 120.000 g/mol.

Bevorzugt kann der durchschnittliche Vernetzungsgrad der Polymerketten der Fasern des luftdurchlässigen Materials, also des Garns oder des optionalen Fasermaterials, weniger als 20% betragen. Der durchschnittliche Vernetzungsgrad bezieht sich auf den Durchschnittswert aller Fasern, also der recyclierten Fasern und der virgin-Fasern. Dies ermöglicht eine gewisse Elastizität der Fasern. Ältere Fasern aus einer Erstverwendung können bereits etwas spröde sein und je nach Anwendung z.B. durch Sonnenlicht oder dergleichen bereits einen hohen Vernetzungsgrad durch Strahlenvernetzung aufweisen. Hier ist es von Vorteil, wenn diese Fasern mit weiteren flexibleren Fasern mit einem geringeren Vernetzungsgrad vermischt werden. Ein höherer Vernetzungsgrad der Polymerketten hat wiederum Vorteile einer besseren mechanischen Festigkeit des Materials. Besonders bevorzugt kann der Vernetzungsgrad der Polymerketten der Fasern zwischen 0,5 und 15 % liegen.

Die Bestimmung des Anteils der vernetzten Ketten, also der Vernetzungsgrad, gilt als Standardverfahren der Qualitätskontrolle in der Polymerverarbeitung. Er kann z.B. durch die Bestimmung des Gel-Gehalts durch Lösungsmittelextraktion bei erhöhter Temperatur ermittelt werden oder durch rheologische Messungen, vorzugsweise oberhalb der Schmelztemperatur der Kristallite der jeweiligen Polymermaterialien.

Weitere vorteilhafte Ausgestaltungen der Erfindung sind Gegenstand der Unteransprüche.

Das luftdurchlässige Material also des Garns oder des optionalen Fasermaterials, kann zumindest zu 5 Gew.%, vorzugsweise zumindest zu 20 Gew.%, ein recycliertes Fasermaterial mit einer Sortenreinheit des Fasermaterials von 80-99 Gew.%, vorzugsweise von 85-97 Gew.%, aufweisen. Dies bedeutet, dass ein Mindestanteil an recyclierten Fasern aus einer Quelle, z.B. einem Teppich, stammen. Eine Zugabe von Recyclatfasern mit undefinierten Anteilen verschiedener Fasern ist nicht von Vorteil. Auch ein zu hoher Verschmutzungsgrad, insbesondere von mehr als 20 Gew.%, ist von Nachteil, da die Bearbeitbarkeit des Textilmaterials darunter leidet. Beispielsweise werden Verbindungsnähte weniger stabil und können sich aufgrund von Verunreinigungen in der Naht leichter lösen, was den Staubsaugerbeutel vorzeitig unbrauchbar macht.

Trotzdem kann es von Vorteil sein, die Fasern aus unterschiedlichen Verwendungen mit vorbestimmten Gehalten zuzugeben, also ein erstes recycliertes Fasermaterial mit hoher Sortenreinheit und ein zweites oder drittes recycliertes Fasermaterial ebenfalls mit hoher Sortenreinheit. Dadurch können auch Glasfasern oder Glaswolle als ein Fasermaterial als Zweitverwendung, z.B. nach der Anwendung als Baumaterial, bei der Ausbildung der vorgenannten Filterlage zugegeben werden. Hierbei kann sie die Beigabe von Bindemittel empfehlen und/oder eine Anordnung der Filterlage als innere Lage einer Wandung oder als Zwischenlage im Staubaufnahmeraum des Staubsaugerbeutels, um eine Absonderung von Glasfasern bei Betrieb eines Staubsaugers gering zu halten

Die Staublast, also der Anteil an partikulärem Staub im luftdurchlässigen Material, also des Garns oder des optionalen Fasermaterials, beträgt aufgrund der Verwendung von recyclierten Fasern zumindest 500 mg/m² bezogen auf eine Dicke der Filterlage von 0,5 mm. Ein gewisser Anteil an Staub kann die Beabstandung der Fasern bei der Verfestigung während der Herstellung der Filterlage vorteilhaft beeinflussen. Diese Funktion als Abstandshalter ermöglicht eine bessere Fluffigkeit des teilverfestigten luftdurchlässigen Materials der Filterlage. Der Anteil an partikulärem Staub signalisiert zugleich das Vorhandensein eines recyclierten Fasermaterials in einem gewissen Umfang. Der Anteil an Staub gegenüber Fasern kann durch Aufbrechen des Fasermaterials und durch eine Staubsedimentierung ermittelt werden. Ein zu hoher Anteil an Staub ist für die Verarbeitung im Textilverarbeitungsprozess und für die mechanische Festigkeit des Staubsaugerbeutels als auch für dessen Speicherfähigkeit von Nachteil. Daher sollte der Anteil an Staub im luftdurchlässigen Material der besagten Filterlage vorzugsweise zwischen 1-20 g/m² betragen. Selbstverständlich sind die Angaben nicht auf eine Filterlage mit dieser Dicke beschränkt, sondern sind bei Verwendung einer Filterlage mit größerer oder geringerer Dicke entsprechend proportional umzurechnen.

Vorteilhaft kann das luftdurchlässige Material, also das Garn oder das optionale Fasermaterial, insbesondere das recyclierte Fasermaterial, zusätzlich zu den Fasern ein Bindemittel aufweisen. Das Bindemittel kann eine bevorzugte Kristallinität zwischen 5 und 45 % aufweisen. Als Messmethode bietet sich die Dynamische Differenzkalorimetrie (DSC) an. Die Kristallinität kann beispielsweise zwischen RT und 200 °C bei einer Heizrate von 10 K/min in Stickstoffatmosphäre (40 ml/min) bestimmt werden. Das recyclierte Fasermaterial oder das luftdurchlässige Material kann in Aluminiumtiegeln mit gelochtem Deckel eingelegt und in der DSC 204 F1 Phoenix der Firma Netzsch ermittelt werden.

Der Anteil an Bindemittel im luftdurchlässigen Material, also im Garn oder im optionalen Fasermaterial, kann dabei zumindest 0,5 Gew.%, vorzugsweise zwischen 1,5-15 Gew.%. besonders bevorzugt zwischen 3-12 Gew.%, betragen. Vorzugsweise wird das Bindemittel als Bestandteil des recyclierten Fasermaterials in den Textilherstellungsprozess eingeführt.

Das Bindemittel kann insbesondere granular ausgebildet sein und oberflächlich, vorzugsweise mit einer mittleren Eindringtiefe von weniger als 20 % des mittleren Durchmessers der Bindemittelpartikel, in Kontakt mit den Fasern stehen. Gerade bei ausgehärteten Bindemittelresten bietet sich diese Vorgehensweise an, da ein vollständiges Auflösen des Bindemittels, welche als Bindemittelpartikel bzw. Bindemittelbröckchen vorliegen, langwierig ist und zu einer Zerstörung der Fasern führen kann. Zugleich kann das Bindemittel, analog zum Staub, als Abstandshalter dienen, wobei der Staub jedoch zumeist seinen Partikelquerschnitt behält, welcher sich u.U. bei den Bindemittelpartikeln durch die Verarbeitung ändern kann. Die oberflächliche Anbindung kann durch anschmelzen oder angelösen der Bindemitteloberfläche erreicht werden.

Es ist von Vorteil, wenn zumindest ein Teil der recyclierten Fasern, vorzugsweise zumindest 20 %, besonders bevorzugt zumindest 50% der Recyclatfasern als Kunststofffasern ausgebildet sind. Bevorzugt für die Verarbeitung sind teilkristalline Fasern, besonders bevorzugt teilkristalline Fasern mit einer Kristallinität zwischen 30-45%. Diese Recyclatfasern bieten einen Kompromiss aus mechanischer Stabilität, um dem eingesaugten partikelbeladenen Luftstrom im Staubsauger hinreichend mechanische Stabilität entgegenzusetzen und zugleich hinreichend Flexibilität damit der Staubsaugerbeutel eingelegt werden kann und damit der Staubsaugerbeutel sich aufblähen kann.

In diesem Zusammenhang empfiehlt sich auch dass die mittlere Faserlänge der eingesetzten recyclierten Fasern des luftdurchlässigen Materials zumindest 1 mm, vorzugsweise zumindest 5 mm beträgt, damit die recyclierten Fasern nicht durch den Luftstrom durch das luftdurchlässige Mediums ausgetragen werden. Für eine besondere mechanische Stabilität können die recyclierten Fasern in der Textillage eine durchschnittliche Länge zwischen 25-80 mm aufweisen.

Eine Wandung des Staubsaugerbeutels kann vorteilhaft zumindest eine Stützlage und eine Kapazitätslage umfassen, wobei die Filterlage eine der beiden vorgenannten Lagen, vorzugsweise die Kapazitätslage, ist. Durch die anfängliche Staublast der Filterlage erfolgt eine zusätzliche Beabstandung der Fasern auch nach deren Verdichtung, so dass Poren bzw. Faserzwischenräume innerhalb der Filterlage auch bei Komprimierung des Filtermaterials offengehalten werden. Bei geringer Staublast, z.B. unter 10 Gew.%, und optimalerweise auch bei einem Bindemittelgehalt von mehr als 1 Gew.% kann das recyclierte Fasermaterial auch derart verfestigt werden, dass es ohne zusätzliche virgin-Fasern eine Stützlage bildet.

Das luftdurchlässige Material kann zudem recycliertes Fasermaterial aus pflanzlichen und/oder tierischen Fasern umfassen. Dieses weitere recyclierte Fasermaterial kann ebenfalls die vorgenannte bevorzugte Staublast aufweisen und zumindest 5%, vorzugsweise 7-90%, der Fasern des luftdurchlässigen Materials bilden. Speziell dieses Material eignet sich besonders gut für die Kapazitätslage. Besonders gut können in diesem Zusammenhang auch recyclierte Cellulosefasern, welche bekannterweise eine sehr hohe Staubaufnahmekapazität aufweisen, eingesetzt werden. Als Ausgangsstoff können hier auch cellulosefaserhaltige Papiere genutzt werden

Die Filterlage kann zumindest Teil einer Wand zur Begrenzung des Staubaufnahmeraumes, z.B. eine Lage einer mehrlagigen Wand, sein. Die Wand kann auch ausschließlich aus der vorgenannten Filterlage bestehen, also einlagig aufgebaut sein. Die Filterlage kann auch Teil einer Vorrichtung zur Strömungsleitung sein, die innerhalb des Staubaufnahmeraumes angeordnet ist oder die besagte Vorrichtung zur Strömungsleitung bilden.

Ein erfindungsgemäßes Verfahren zur Herstellung des erfindungsgemäßen Staubsaugerbeutels weist die folgenden Schritte auf:
A) Bereitstellen einer Oberfläche, z.B. einer Ablagefläche;
B) Ausbringen von Recyclat-Fasern auf die Oberfläche durch ein Verfahren der Garnbildung;
C) Anordnen und Verbinden der Filterlage, ggf. mit weiteren Filterlagen, unter Ausbildung eines Staubsaugerbeutels.

In diesem Verfahren werden zur Beeinflussung der Materialeigenschaften der recyclierten Fasern zusätzlich virgin-Fasern beigemischt.

Der erfindungsgemäße Staubsaugerbeutel selbst kann allerdings auch vollständig aus recyclierten Fasermaterial bestehen, wobei die Kombination der Schritte B und C im vorgenannten Verfahren den zusätzlichen Vorteil der Materialeinstellung über den Anteil der virgin-Fasern und recycelten Fasern bietet.

Weitere vorteilhafte Ausgestaltung des erfindungsgemäßen Verfahrens sind Gegenstand der Unteransprüche.

In Schritt C) kann eine Dosierung des Ausbringens an recyclierten Fasermaterial derart erfolgt, dass der Anteil an Recyclatfasern 10-90 % der Gesamtmasse an Fasern entspricht.

Zur Verbesserung der Verdichtung des Fasermaterials zur Ausbildung der Filterlage im Rahmen des Schrittes C nach dem Zuführen der Recyclatfasern kann das recyclierte Fasermaterial mit einem Lösungsmittel, vorzugsweise mit einem Lösungsmittel zur Aktivierung des Bindemittels, in Kontakt gebracht werden. Hierbei weist das recyclierte Fasermaterial bevorzugt das besagte Bindemittel, besonders bevorzugt in granularer Form, auf. Das "in Kontakt bringen" kann vorzugsweise durch einen Lösungsmittelsprühnebel erfolgen, welcher das Bindemittel oberflächlich anlöst.

Die recyclierten Fasern werden in vorliegenden Verfahren durch mechanische und/oder thermische Bearbeitung eines Fasermaterials einer Erstverwendung ohne Granulierungszwischenschritt bereitgestellt. Das heißt z.B. für einen Teppich, dass der Teppich nicht erst zu einem Kunststoffgranulat recycelt wird, sondern die bereits existierenden Fasern mechanisch und/oder thermisch ohne Auflösen der Faserform verarbeitet wird.

Dies ist eine energieeffiziente und wirtschaftlich Verarbeitung für einen Großteil an Fasermaterialen am Ende des Lebenszyklus einer Erstverwendung.

Zusätzlich zu der Herstellung von Staubsaugerbeuteln aus recycliertem Material kann auch der Staubsauger selbst oder einzelne Zubehörteile des Staubsaugers, wie z.B. Saugdüsen, Filtergehäuse, Halteplatten oder Vlieseinlagen aus recycliertem Kunststoffmaterial hergestellt sein.

Als recycliertes Kunststoffmaterial im Sinne der vorliegenden Erfindung kann eine beliebige Form von Kunststoffen je nach Recycling-Prozess und Verarbeitungsstufe eingesetzt werden. Beispiele hierfür sind z.B. Industrial Waste (Kunststoff aus Industrieabfall), Pre-consumer Waste (Abfälle die vor dem Verbraucher anfallen), Post Consumer Waste (Abfälle die nach der Nutzung durch den Verbaucher anfallen), usw. Die Aufzählung erstreckt sich über jede Form von erstmalig oder mehrmalig verarbeiteten Kunststoff, welcher nochmals im Recyclingprozess aufgearbeitet wird.

Auch Kunststoff-Abfälle aus unterschiedlichen Quellen können für den recyclierten Kunststoff genutzt werden. Hier kommt u.a. Kunststoff aus Meeren, Flüssen, Ufern, Straßenrändern, Altdeponien, gesammelte Plastik usw. in Betracht. Die Aufzählung ist nicht einschränkend zu verstehen.

Die Erfindung wird nachfolgend anhand zweier Ausführungsbeispiele mit Bezug auf die beigefügten Zeichnungen näher erläutert. Es zeigen:

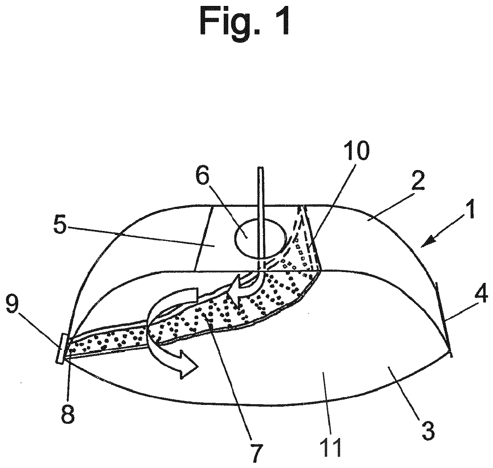

- Fig. 1: eine schematische Ansicht eines erfindungsgemäßen Filterbeutels.

Ein Staubsaugerbeutel 1 umfasst eine obere Wandung 2 und eine untere Wandung 3 aus luftdurchlässigem Material, beispielsweise garnstabilisierter Vliesstoff oder eine Textilage, die ein- oder mehrlagig ausgebildet ist. Die Wandungen des Beutels 1 sind an den Seitenkanten 4 miteinander verschweißt und begrenzen einen Staubaufnahmeraum 11. Der Staubsaugerbeutel 1 kann beispielsweise als Flachbeutel oder Klotzbodenbeutel ausgebildet sein. An der oberen Wandung 2 ist eine Halteplatte 5 vorgesehen, in der eine Einströmöffnung 6 ausgespart ist. In Gebrauch wird ein Stutzen eines Staubsaugers in die Einströmöffnung 6 durch die Halteplatte und die obere Lage 2 eingesteckt.

Um den durch die Einströmöffnung 6 eintretenden Luftstrom umzulenken, ist eine als Streifen oder Zwischenwandelement ausgebildete Vorrichtung zur Strömungsleitung 7 vorgesehen, der an einem Ende 8 an einer Schweißnaht 9 der oberen Wandung 2 und der unteren Wandung 3 fixiert ist. An dem gegenüberliegenden Ende 10 ist der Streifen an der oberen Lage 2 im Bereich eines Randes der Halteplatte 5 benachbart zu der Einströmöffnung 6 fixiert. Dadurch besitzt der Streifen im geöffneten Zustand des Filterbeutels 1 eine schräge Lage und kann den eintretenden Luftstrom umlenken, sowie dies mit den Pfeilen dargestellt ist. Durch die zyklonartige Luftströmung wird erreicht, dass sich die Beutelwände nicht gleichmäßig mit Staub beladen, sondern es Ecken gibt, die vorrangig zur Ablagerung von Staub dienen, so dass die effektive Saugleistung auch bei einer gewissen Beladung des Filterbeutels 1 nicht so stark abnimmt.

Sowohl die Wandungen 2 und 3 als auch die Vorrichtung der Strömungsleitung kann eine Filterlage aus einem luftdurchlässigen Material aufweisen. Dieses luftdurchlässige Material kann zu einem gewissen Prozentsatz recyclierte Fasern - sogenannte Recyclat-Fasern - aufweisen oder zumindest bereichsweise oder sogar vollständig daraus bestehen.

Insbesondere kann die Filterlage als Textillage ausgebildet sein, welche aus Garn aus Recyclat-Fasern gebildet ist. Optional kann zwischen dem Garn auch lockeres Fasermaterial angeordnet sein. Dieses kann ebenfalls Recyclatfasern aufweisen.

Eine weitere nicht-dargestellte Option für den Einsatz des vorgenannten Materials umfassend recyclierte Fasern ist der Einsatz der vorgenannten Filterlage als Teil einer Zwischenlage innerhalb des Staubaufnahmeraumes 11. Diese Zwischenlage kann eine Sollrissnaht aufweisen. Bei zunehmender Beladung der Zwischenlage kann diese Sollrissnaht aufreißen und einen Teilbereich des Staubaufnahmeraumes freigeben. Somit fungiert die Zwischenlage als Staubfänger innerhalb des Staubsaugerbeutels. Die Zwischenlage kann ausschließlich aus der vorgenannten Filterlage bestehen. Zugleich ermöglicht die Zwischenlage jedoch auch eine optimiertere Strömungsleitung, wie dies auch durch den vorgenannten Streifen bzw. durch die Vorrichtung der Strömungsleitung 7 erreicht wird.

Kommen Duftstoffe oder Antimikrobielle Substanzen innerhalb des Staubsaugerbeutels zum Einsatz, so kann ein aus Textilstoff gefertigtes Sachet die vorgenannte Filterlage aufweisen oder es kann daraus bestehen.

Die Filterlage kann aus geschredderten Fasern eines zerkleinerten vorbenutzten Fasermaterials gefertigt sein. Dabei kann die Filterlage mehrere Fasersorten z.B. Cellulosefasern und thermoplastische Fasern aufweisen.

Eine zusätzliche Verbesserung der mechanischen Eigenschaften der Filterlage kann erreicht werden, wenn weitere Fasern als virgin-Fasern im Produktionsprozess, vorzugsweise ein Spunbondvlies, zugefügt sind und die recyclierte Fasermaterial auf den weiteren Fasern bzw. dem Spunbondvlies abgelegt sind. Dadurch wird erreicht, dass die Lage auf einer Seite verfestigt ist und auf der gegenüberliegenden Seite die Flauschigkeit beibehält. Es können auch Bicomponenten-Fasern als weitere Fasern verwendet werden.

Folgende Polymere bzw. Fasern sind dabei für Zumischungen zur Herstellung des Luftfiltermediums als recyclierte Fasern eines recyclierten Fasermaterials besonders geeignet: PE, PP, PS, ABS, PAN, PES, PC, PMMA, PA, PUR, TPU, PES, PVA, POM, EVA, PEO, PVC, Cellulose, Viskose, Melamin, Wolle, Baumwolle, Glaswolle, Steinwolle.

Besonders bevorzugt können Fasern aus Teppichböden oder Textilien zurückgewonnen werden. Als recyclierte Fasern können synthetische Kunstfasern und besonders bevorzugt Polyamid oder Polyester verwandt werden.

Zunächst werden die Fasern zerrissen bzw. mechanisch aufgetrennt und aufgelockert. Dies kann mit einer Kardier- oder Kratzmaschine erfolgen in welcher die Faserstruktur eines Teppichs aufgebrochen wird.

War der Teppichflor auf einem Untergrund verklebt oder war im Teppichflor selbst Bindemittel enthalten, so kann ein Restgehalt an Bindemittel noch in dem Fasermaterial haften bleiben. Dieses zumeist eingetrocknete Bindemittel kann durch Lösemittelzugabe angelöst und dadurch neu aktiviert werden. Wie sich gezeigt hat, reicht dabei ein Anlösen der Bindemittelpartikel aus, um eine verbesserte Festigkeit der Lage zu erreichen. Zugleich kann das aufgebrochene Faserbündel an Teppichfasern durch diesen Schritt oder durch thermische Behandlung in einem Heißkalander durch Anschmelzen kompaktiert werden.

Das Lösemittel kann als Sprühnebel aufgetragen werden. Im Fall von Polyesterfasern oder -bindemittel beispielweise eignet sich Aceton oder ein geruchsneutraler Acetonersatz, z.B. ein Gemisch aus Dimethylsuccinat, Dimethylglutarat und Dimethylsuccinat jeweils im Bereich von 10-65 Vol.%.

Alternativ oder zusätzlich zur chemischen Aktivierung des recyclierten Fasermaterials kann auch eine thermische Aktivierung z.B. durch Thermokalandrierung erfolgen.

Oftmals befindet sich partikulärer Staub im Material. Dieser kann durch Einblasen von Luft teilweise, allerdings meist nicht vollständig abgetrennt werden. Staub ist in diesem Kontext nicht zu verwechseln mit Silberpartikeln oder gar antimikrobiellen Granulaten, welche einem Textilstoff zugegeben werden. Staub ist vorwiegend organischen oder anorganischen Ursprungs und beispielsweise Gesteinskörner, Ruß und Feinstaub und dergleichen. Ein gewisser Restgehalt an Staub ist je nach dem Ursprung der recyclierten Fasern nicht zu vermeiden. Dieser senkt zwar die Aufnahmekapazität der Filterlage an Staub von Beginn an, allerdings überwiegt der Umweltaspekt der Rückgewinnung einer zuvor wertlosen Faserquelle, z.B. des Teppichs.

Teppichfasern sind nur eine bevorzugte Form an recyclierten Fasern. Als recyclierte Fasern werden im Kontext der vorliegenden Erfindung Fasern bezeichnet, welche bereits vor einem Recyclingschritt als Fasermaterial genutzt wurden. Entsprechende Fasermaterialien sind alte Sachen oder Lumpen, Teppiche, Stoff-Atemmasken, Fußmatten, Handtücher, Papiere, Dämmmaterial und dergleichen.

Es empfiehlt sich zur besseren Abscheidung von Staub das Fasermaterial zu schreddern, wobei eine durchschnittliche bzw. mittlere Faserlänge von mehr als 1 mm für eine optimale Filterwirkung eingehalten werden sollte. Durch ein Zerkleinern können die rezyklierten Fasern zu Kurzfasern mit einer Länge von 5 bis 80 mm verarbeitet und in die Lage eingearbeitet werden. Beim Schreddern kann ein Klingenabstand entsprechend eingestellt werden.

Die Recyclat-Fasern können bei der Herstellung zeitgleich mit virgin-Fasern z.B. im noch leicht flüssigen Zustand der virgin-Fasern in die Lage eingebracht werden oder nachträglich auf die Lage aufgebracht und mit dieser verbunden werden.

Nach der Ablage der recyclierten Fasern kann optional eine Einbringung in eine zuvor abgelegte Lage aus virgin-Fasern per Vernadelung oder per Druckluft oder Wasserstrahlen oder andere üblicher Verfahren erfolgen.

Eine elektrostatische Aufladung der gebildeten Filterlage kann zudem über eine zusätzliche Behandlung der Lage erfolgen.

Sodann kann eine Ausbildung eines Staubsaugerbeutels durch Verbinden zweier oder mehrerer Filterlagen mittels einer Naht durch thermisches oder ultraschall Prägekalandern erfolgen. Typischerweise stört ein höherer Staubanteil die Verbindung der Filterlagen durch eine Naht. Es hat sich allerdings überraschend herausgestellt, dass eine Filterlage selbst mit einem Gewichtsanteil von 20 Gew.% Staub im Material der Filterlage noch zu einem Staubfilterbeutel verarbeitet werden kann.

Als Staub werden diesbezüglich alle Verunreinigungen organischer und anorganischer Natur bezeichnet, welche sich in einem Fasermaterial typischerweise bei der Anschmutzung im Alltag anfinden. Typischerweise sind dies oft Gesteins- und/oder Silikatpartikel z.B. in Teppichen. Somit kann man im Rahmen der vorliegenden Erfindung auch bei stark-staubhaltigen Materialien ein kostengünstiges Recycling durchführen.

Vorzugsweise umfasst die Filterlage eine Kombination verschiedener Schichten aus Filtermaterial, nämlich einen Grobstaubspeicher, einen Feinfilter und eine stabilisierenden Lage. Dabei kann der Grobstaubspeicher Schmutz von weniger als 1mm speichern und eine Luftdurchlässigkeit von mehr als 10001/qm x s, eine Dicke von 0.5 - 5 mm, vorzugsweise 1 - 2 mm und einem Flächengewicht zwischen 20 - 200 g/qm aufweisen. Der Feinfilter speichert feinen Schmutz von mehr als 0.0001 mm und weist eine Luftdurchlässigkeit von weniger als 2001/qm x s, eine Dicke von weniger als 0.5 mm und ein Flächengewicht zwischen 15 - 80 g/qm auf.

Die stabilisierenden Lage kann vorzugsweise eine Luftdurchlässigkeit von mehr als 500 1/qm x s, eine Dicke von weniger als 1 mm und ein Flächengewicht zwischen 15 - 100 g/qm aufweisen und kann z.B. aus einem Textil, einem Gittergelege oder einer perforierten oder geschlitzten Folie bestehen.

In einer weiteren Ausgestaltung kann eine zusätzliche Feinstfilterschicht in Form einer Lage aus Meltblown oder Nanofasern als Teil der vorgenannten Filterlage mit einem Faserdurchmesser von 10 - 2000 nm vorgesehen, wobei die Nanofaserschicht feinen Schmutz zurückhält und eine Luftdurchlässigkeit von mehr als 500 1/qm x s, eine Dicke von weniger als 0.1 mm und ein Flächengewicht zwischen 0.01 - 2 g/qm aufweist. Die Nanofaserschicht kann dabei direkt auf der Feinfilterschicht, z.B. einem Meltblow abgelegt sein.

### Bezugszeichen

- 1: Staubsaugerbeutel
- 2: obere Wandung
- 3: untere Wandung
- 4: Seitenkante
- 5: Halteplatte
- 6: Einströmöffnung
- 7: Vorrichtung zur Strömungsleitung
- 8: erstes Ende
- 9: Schweißnaht
- 10: zweites Ende
- 11: Staubaufnahmeraum

## Patentansprüche

1. Staubsaugerbeutel (1) mit einem Staubaufnahmeraum (11), umfassend zumindest eine Filterlage aus einem luftdurchlässigen Material welches ein Recycling-Garn aufweist oder daraus besteht.

2. Staubsaugerbeutel **dadurch gekennzeichnet, dass** Filterlage zudem ein Fasermaterial aufweist, dessen Fasern eine durchschnittliche Kräuselfrequenz der Fasern 0,2 bis 5 Kräusel/cm aufweist und/oder dass das Fasermaterial einen durchschnittlichen Kräuselindex, insbesondere bei Fasern der vorgenannten Kräuselfrequenz, von zumindest 10% aufweist.

3. Staubsaugerbeutel nach Anspruch 1, **dadurch gekennzeichnet, dass** Recycling-Garn aus zumindest 10% Fasern besteht, wobei die Fasern aus einem Material mit einem Molgewicht von mehr als 35000 g/mol bestehen.

4. Staubsaugerbeutel nach Anspruch 1 oder 2, **dadurch gekennzeichnet, dass** die Filterlage als Textillage und/oder Flächengebilde ausgebildet ist, wobei das Recycling-Garn vorzugsweise zumindest zu 5 Gew.%, besonders bevorzugt zu 20 Gew.%, recyclierte Fasermaterial mit einer Sortenreinheit des Fasermaterials von 80-99 Gew.%, vorzugsweise von 85-97 Gew.%, aufweist.

5. Staubsaugerbeutel nach Anspruch 1, 2 oder 3, **dadurch gekennzeichnet, dass** die Staublast der Filterlage, also der Anteil an partikulärem Staub im luftdurchlässigen Material, zumindest 500 mg/m² bezogen auf eine Dicke der Filterlage von 0,5 mm, vorzugsweise zwischen 1-20 g/m², beträgt.

6. Staubsaugerbeutel nach einem der vorhergehenden Ansprüche, **dadurch gekennzeichnet, dass** das luftdurchlässige Material, insbesondere das recyclierte Fasermaterial, zusätzlich zu den Fasern ein Bindemittel aufweist, vorzugsweise mit einer Kristallinität des Bindemittels zwischen 5 und 45 %.

7. Staubsaugerbeutel nach einem der vorhergehenden Ansprüche, **dadurch gekennzeichnet, dass** zumindest 20 %, besonders bevorzugt zumindest 50% der recyclierten Fasern des Garns oder des Fasermaterials Kunststofffasern, bevorzugt teilkristalline Kunststofffasern, besonders bevorzugt teilkristalline Kunststofffasern mit einer durchschnittlichen Kristallinität zwischen 30-45%, sind.

8. Staubsaugerbeutel nach einem der vorhergehenden Ansprüche, **dadurch gekennzeichnet, dass** die durchschnittliche Faserlänge der Fasern des recyclierten Fasermaterials zumindest 1 mm, vorzugsweise zumindest 5 mm, besonders bevorzugt zwischen 25-80 mm, beträgt.

9. Staubsaugerbeutel nach einem der vorhergehenden Ansprüche, **dadurch gekennzeichnet, dass** eine Wandung (2, 3) zur Begrenzung des Staubaufnahmeraumes (11) zumindest eine Stützlage und eine Kapazitätslage umfasst, wobei die Filterlage eine der beiden Lagen, vorzugsweise die Kapazitätslage, ist.

10. Staubsaugerbeutel nach einem der vorhergehenden Ansprüche, **dadurch gekennzeichnet, dass** das luftdurchlässige Material als weiteres recycliertes Fasermaterial pflanzliche und/oder tierische Fasern aufweist, wobei der Anteil dieses weiteren recyclierten Fasermaterial am luftdurchlässigen Material zumindest 5% aller Fasern beträgt.

11. Staubsaugerbeutel nach einem der vorhergehenden Ansprüche, **dadurch gekennzeichnet, dass** die Filterlage zumindest Teil einer Wandung (2, 3) zur Begrenzung des Staubaufnahmeraumes (11) ist und/oder dass die Filterlage als Teil einer Vorrichtung zur Strömungsleitung (7) innerhalb des Staubaufnahmeraumes (11) angeordnet ist.

12. Verfahren zur Herstellung eines Staubsaugerbeutels nach einem der vorhergehenden Ansprüche, **gekennzeichnet durch die folgenden Schritte:**
A) Bereitstellen einer Oberfläche;
B) Ausbringen von Recyclat-Fasern auf die Oberfläche durch ein Verfahren der Garnbildung;
C) Anordnen und Verbinden der Filterlage, ggf. mit weiteren Filterlagen, insbesondere als Wandungen und/oder als Vorrichtung der Strömungsleitung (7), unter Ausbildung eines Staubsaugerbeutels (1).

13. Verfahren nach Anspruch 12, **dadurch gekennzeichnet, dass** in Schritt C) eine Dosierung des Ausbringens an recyclierten Fasermaterial derart erfolgt, dass es 10-90 % der Gesamtmasse an Fasern entspricht.

14. Verfahren nach Anspruch 12 oder 13, **dadurch gekennzeichnet, dass** das recyclierte Fasermaterial mit einem Lösungsmittel, vorzugsweise mit einem Lösungsmittel zur Aktivierung des Bindemittels, in Kontakt gebracht wird.

15. Verfahren nach einem der vorhergehenden Ansprüche, **dadurch gekennzeichnet, dass** die recyclierten Fasern durch mechanische und/oder thermische Bearbeitung eines Fasermaterials ohne Granulierungs-zwischenschritt bereitgestellt werden.
